## Europäisches Patentamt
## European Patent Office
## Office européen des brevets

(19)

(11) Veröffentlichungsnummer: **0 184 773**
**B1**

(12) **EUROPÄISCHE PATENTSCHRIFT**

(45) Veröffentlichungstag der Patentschrift:
**10.08.88**

(51) Int. Cl.⁴: **C 02 F 1/42**

(21) Anmeldenummer: **85115466.6**

(22) Anmeldetag: **05.12.85**

(54) **Wasserenthärtungsanlage.**

(30) Priorität: **12.12.84 DE 3445351**

(43) Veröffentlichungstag der Anmeldung:
**18.06.86 Patentblatt 86/25**

(45) Bekanntmachung des Hinweises auf die Patenterteilung:
**10.08.88 Patentblatt 88/32**

(84) Benannte Vertragsstaaten:
**AT BE CH DE FR GB IT LI LU NL SE**

(56) Entgegenhaltungen:
**US-A-3 891 552**
**US-A-4 275 448**

(73) Patentinhaber: **Grünbeck Wasseraufbereitung GmbH, Industriestr. 1, D-8884 Höchstädt (DE)**

(72) Erfinder: **Arens, Hans, Uhlandweg 6, D-8857 Wertingen (DE)**
Erfinder: **Kern, Hans, Wimpasing 4, D-8221 Vachendorf (DE)**

(74) Vertreter: **Prüfer, Lutz H., Dipl.- Phys., Harthauser Strasse 25d, D-8000 München 90 (DE)**

EP 0 184 773 B1

**Beschreibung**

Die Erfindung betrifft eine Wasserenthärtungsanlage mit einem Zulauf für zu enthärtendes Wasser und einem Ablauf für enthärtetes Wasser, einen Ionenaustauscher zwischen Zulauf und Ablauf, einem Salzbehälter und einem in den Zulauf und Ablauf geschalteten und mit dem Salzbehälter sowie einem Abfluß verbindbaren Steuerventil zum Steuern von Betriebsphasen der Wasserenthärtungsanlage.

Eine derartige Wasserenthärtungsanlage wird zum Anschluß an einer Wasserleitung verwendet. Das zu enthärtende Wasser wird über den Zulauf einem Ionenaustauscher zugeführt, in dem die Karbonathärte entfernt wird. Das enthärtete wasser wird in die Wasserleitung zum Verbraucher geleitet. Da der Ionenaustauscher nur ein begrenztes Aufnahmevermögen besitzt, muß nach einer vorgegebenen Dauer einer Betriebsphase eine Regenerierung durch Kochsalzlösung erfolgen. Zur Durchführung dieser Regenerierung sind mehrere Betriebsphasen der Wasseraufbereitungsanlage erforderlich, die im wesentlichen aus den Betriebsphasen, Rückspülen, Zuführen von Wasser zum Salzbehälter, Besalzen, Verdrängen (langsamer Spülzyklus) und Auswaschen bestehen. Die Reihenfolge dieser Betriebsphasen und die Dauer jeder einzelnen Phase ist dabei genau vorgeschrieben. Dazu war es bisher notwendig, die einzelnen Armaturen, die zur Durchführung dieser Betriebsphasen herkömmlicher Weise notwendig waren, entweder von Hand oder mittels einzelner Antriebe und eines Zeitsteuerwerks zu schalten. Dies erforderte einen hohen Platz- und Kostenaufwand, was für kleinere Anlagen unwirtschaftlich und ungeeignet war.

Es ist daher Aufgabe der Erfindung, eine verbesserte Wasserenthärtungsanlage zu schaffen. Insbesondere soll die Wasserenthärtungsanlage so aufgebaut sein, daß sie auch für kleine Anlagen geeignet ist. Dazu soll die Anlage einfach und billig in der Herstellung und der Wartung sein, geringe Platzverhältnisse erfordern und insbesondere es ermöglichen, sämtliche Betriebsphasen in der vorgeschriebenen Reihenfolge und Dauer mittels eines einzigen Antriebes in der vorgeschriebenen Weise durchführen zu können.

Diese Aufgabe wird durch eine Wasserenthärtungsanlage der eingangs beschriebenen Art gelöst, die erfindungsgemäß dadurch gekennzeichnet ist, daß das Steuerventil eine erste Ventileinheit mit einem ersten Absperrventil für den Zulauf und einem zweiten Absperrventil für den Ablauf und eine mit der ersten Ventileinheit funktionell verbundene zweite Ventileinheit, die mit dem Salzbehälter und dem Abfluß verbindbar ist und den Zufluß zum und Abfluß vom Ionenaustauscher entsprechend der Betriebsphasen der Wasserenthärtungsanlage steuert, aufweist.

Weitere Merkmale der Erfindung sind in den Unteransprüchen gekennzeichnet.

Weitere Merkmale und Zweckmäßigkeiten der Erfindung ergeben sich aus der Beschreibung von Ausführungsbeispielen im Zusammenhang mit den Figuren. Von den Figuren zeigen:

Fig. 1    eine schematische Darstellung einer ersten Ausführungsform einer erfindungsgemäßen Wasserenthärtungsanlage;

Fig. 2    eine schematische Seitenansicht des erfindungsgemäßen Steuerventils in der Anlage nach Fig. 1;

Fig. 3    eine perspektivische Darstellung der zweiten Ventileinheit im erfindungsgemäßen Steuerventil mit explosionsmäßig auseinandergezogenen Einzelteilen;

Fig. 4    eine Draufsicht auf eine im Steuerventil vorgesehene erste Steuerscheibe;

Fig. 5    eine Draufsicht auf eine im Steuerventil vorgesehene zweite Steuerscheibe;

Fig. 6    eine Ansicht der Steuerscheibe nach Fig. 5 von unten;

Fig. 7    einen Schnitt durch eine Sauglanze zum Verbinden des Salzbehälters mit dem Steuerventil; und

Fig. 8    eine schematische Ansicht einer weiteren Ausführungsform der erfindungsgemäßen Wasserenthärtungsanlage.

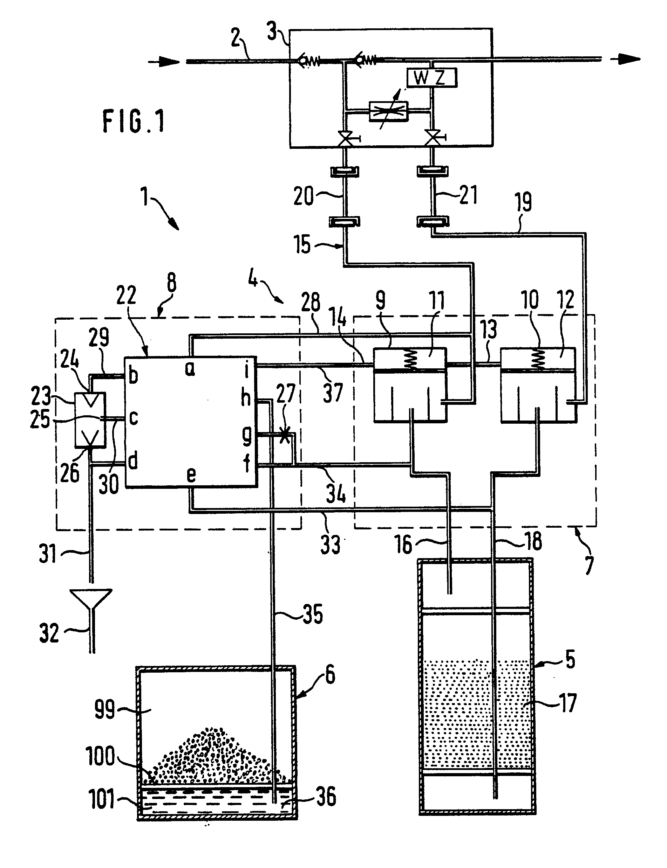

Die in Fig. 1 schematisch dargestellte Ausführungsform der erfindungsgemäßen Wasserenthärtungsanlage 1 weist im wesentlichen eine in eine Wasserleitung 2 eingebaute Anschlußarmatur 3, ein Steuerventil 4, einen als Ionenaustauscher ausgebildeten Enthärter 5 und einen Salz- bzw. Solebehälter 6 auf. Das Steuerventil 4 umfaßt zwei in Fig. 1 jeweils gestrichelt umgrenzte getrennte Ventileinheiten, nämlich eine erste Ventileinheit 7 (in Fig. 1 rechts dargestellt) und eine zweite Ventileinheit 8 (in Fig. 1 links dargestellt). In der ersten Ventileinheit 7 ist ein erstes Absperrventil 9 und ein zweites Absperrventil 10 angeordnet, die jeweils als Membranventile ausgebildet sind, deren Steuerkammern 11, 12 über eine Leitung 13 zur Parallelschaltung beider Ventile verbunden sind. Die Membranventile 9, 10 sind ferner so ausgebildet, daß sie in Normalstellung geöffnet sind und nur bei einer Druckbeaufschlagung der Steuerkammern 11, 12 über einen Steuereingang 14 geschlossen sind. Das erste Absperrventil 9 ist eingangsseitig über eine Zulaufleitung 15 und die Anschlußarmatur 3 mit der Zuflußseite der Wasserleitung 2 und ausgangsseitig über eine Verbindungsleitung 16 mit der Zulaufseite des Ionenaustauschers 5 bzw. eines Harzbettes 17 darin verbunden. Das zweite Absperrventil 10 ist eingangsseitig über eine zweite Verbindungsleitung 18 mit der Ablaufseite des Ionenaustauschers 5 bzw. des Harzbettes 17 darin und ausgangsseitig über eine Ablaufleitung 19 und die Anschlußarmatur 3 mit dem Abfluß der Wasserleitung 2 verbunden. In der Zulaufleitung 15 und der Ablaufleitung 19 sind jeweils flexible Leitungsstücke 20, 21 in Form von Metallgewebeschläuchen vorgesehen.

Die zweite Ventileinheit 8 umfaßt im wesentlichen ein in Fig. 1 durch einen Kasten dargestelltes Drehschieberventil 22 mit neun Ein- bzw. Ausgängen a... i, einen Injektor bzw. eine Wasserstrahl-Saugpumpe 23 mit einem Eingang 24, einem Sauganschluß 25 und einem Ausgang 26, sowie eine Drossel 27. Diese Bauteile sind folgendermaßen verbunden: Ein Eingang a des Drehschieberventils 22 ist über eine Leitung 28 mit der Zulaufleitung 15, ein Ausgang b über eine Leitung 29 mit dem Eingang 24 des Injektors 23, ein Ausgang c über eine Leitung 30 mit dem Sauganschluß 25, ein Ausgang d mit dem Ausgang 26 des Injektors und gemeinsam mit diesem über eine Abflußleitung 31 mit einem Abfluß bzw. Kanal 32, ein Anschluß e über eine Leitung 33 mit der zweiten Verbindungsleitung 18, ein Anschluß f über eine Leitung 34 mit der ersten Verbindungsleitung 16, ein Ausgang g über die Drossel 27 mit der Leitung 34, ein Anschluß h über eine Verbindungsleitung 35 mit einem Solevorrat 36 im Salzbehälter 6 und ein Ausgang i über eine Steuerleitung 37 mit dem Steuereingang 14 der Absperrventile 9, 10 verbunden.

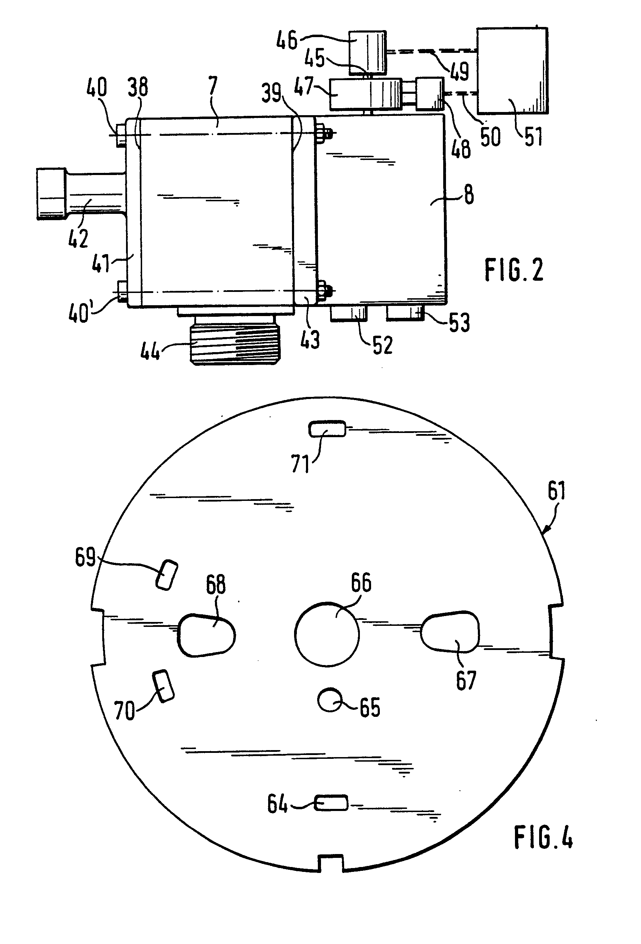

In Fig. 2 ist der Aufbau und die Verbindung des Steuerventils 4 in einer Seitenansicht gezeigt. Die erste Ventileinheit 7 ist als im wesentlichen Prismenförmiger Block mit zwei parallelen, gegenüberliegenden Flanschebenen 38, 39 ausgebildet und mittels Schraubbolzen 40, 41 so zwischen eine Anschlußplatte 41 mit Anschlüssen 42 für die Zulaufleitung 15 bzw. Ablaufleitung 19 und die zweite Ventileinheit 8 eingespannt, daß die Anschlußplatte 41 gegen die erste Flanschebene 38 und die zweite Ventileinheit 8 mit einem Flansch 43 gegen die zweite Flanschebene 39 anliegt. An der Unterseite der ersten Ventileinheit 7 ist ein Anschlußstutzen 44 mit einem Außengewinde zum Anschrauben des Ionenaustauschers 5 und koaxialen Kanälen für die Verbindungsleitungen 16, 18 angeordnet. Die zweite Ventileinheit 8 weist eine Steuerwelle 45 zum Steuern des Drehschieberventils 22 in einer später beschriebenen Weise auf, die sich auf der Oberseite der zweiten Ventileinheit 8 aus dieser heraus erstreckt und dort mit einem Antrieb 46 zum Drehen der Steuerwelle 45 sowie mit einer Kodierscheibe 47 zum Abgreifen der Drehstellung der Steuerwelle 45 mittels einer ebenfalls auf der Oberseite der zweiten Ventileinheit 8 angeordneten Abtastvorrichtung 48 verbunden. Der Antrieb 46 und die Abtastvorrichtung 47 sind jeweils über Leitungen 49, 50 mit einer Steuerung 51 zum Steuern des Antriebs 46 verbunden. Auf ihrer dem Antrieb 46 bzw. der Kodierscheibe 47 gegenüberliegenden Unterseite weist die zweite Ventileinheit 8 ferner zwei Anschlußstutzen 52, 53 zum Anschließen der Verbindungsleitung 35 bzw. der Abflußleitung 31 auf.

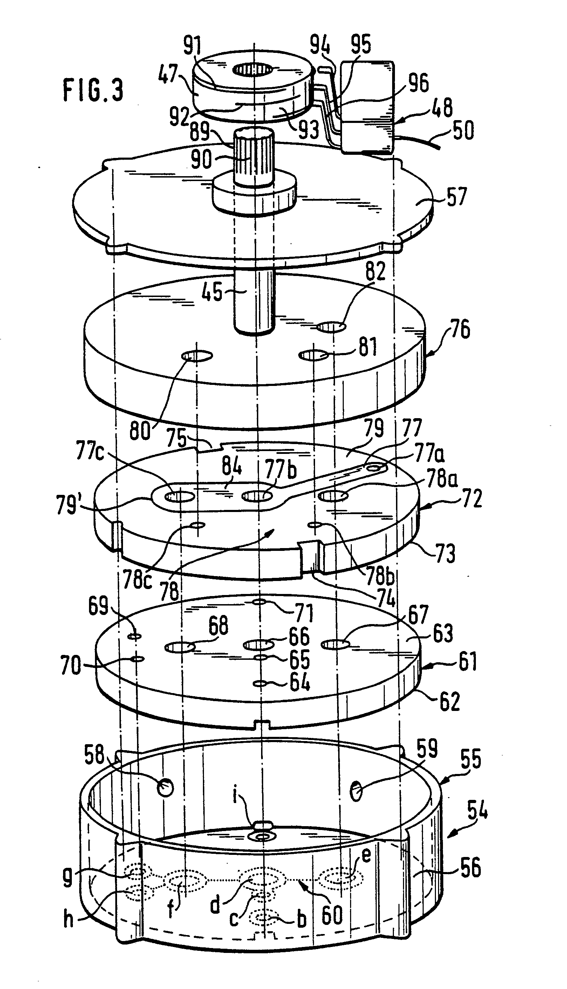

Der Aufbau des Drehschieberventils 22 in der zweiten Ventileinheit 8 ist im Detail in Fig. 3 dargestellt. Es weist ein topfartiges zylindrisches Gehäuse 54 mit einer zylindrischen Wand 55 und einer im wesentlichen ebenen Bodenfläche 56 auf, dessen offene Stirnseite mit einem Deckel 57 dicht verschlossen ist. In den Innenraum des Gehäuses 54 münden durch die Wand 55 zwei Öffnungen 58, 59, die den oben genannten Anschluß a des Drehschieberventils 22 darstellen. Die Anschlüsse b... i sind als Öffnungen in der Bodenfläche 56 in einer später beschriebenen Anordnung vorgesehen und jeweils durch eine in Fig. 3 punktiert dargestellte Dichtung 60 umgeben, die etwas über die Bodenfläche 56 hervorsteht.

In das Gehäuse 54 ist eine erste Steuerscheibe 61 in Form einer kreisförmigen Keramikscheibe drehfest derart eingesetzt, daß ihre untere Stirnfläche 62 über die Dichtung 60 auf der Bodenfläche 56 aufliegt und ihre obere Stirnfläche 63 zum Deckel 57 weist. In der ersten Steuerscheibe 61 sind acht Öffnungen 64 bis 71 vorgesehen, die sich jeweils von der oberen Stirnfläche 63 zur unteren Stirnfläche 62 durch die Steuerscheibe 61 hindurcherstrecken und in der Steuerscheibe so angeordnet sind, daß bei in das Gehäuse 64 eingesetzter Steuerscheibe 61 jeweils eine Öffnung 64 bis 71 mit einer entsprechenden Öffnung b... i des Gehäuses 54 in Verbindung steht und gegenüber den anderen Öffnungen b... i über die Dichtung 60 abgedichtet ist.

Auf der der Bodenfläche 56 abgewandten Seite der ersten Steuerscheibe 61 ist koaxial zur ersten Steuerscheibe 61 eine zweite Steuerscheibe 72 in Form einer kreisförmigen Keramikscheibe mit dem gleichen Durchmesser wie der ersten Steuerscheibe 61 angeordnet Die zweite Steuerscheibe 72 liegt mit ihrer unteren Stirnfläche 73 gegen die obere Stirnfläche 63 der ersten Steuerscheibe 61 an und weist an ihrer Umfangsfläche Ausnehmungen 74, 75 auf, in die (nicht gezeigte) Mitnehmer einer koaxial zur zweiten Steuerscheibe 72 angeordneten Mitnehmerscheibe 76 zum Drehen der zweiten Steuerscheibe 72 eingreifen. Die zweite Steuerscheibe 72 weist zwei Gruppen 77, 78 von Öffnungen auf, die voneinander durch eine zwischen der oberen Stirnfläche 79 und der der zweiten Steuerscheibe 72 zugewandten Seite der Mitnehmerscheibe 76 angeordnete Dichtung 79' getrennt sind, die in einer Nut in der Mitnehmerscheibe 76 derart gehalten ist, daß sie über die der zweiten Steuerscheibe 72 zugewandte Stirnfläche der Mitnehmerscheibe 76 etwas hervorsteht. Die Mitnehmerscheibe 76 weist an der Stelle der zweiten Gruppe 78 der Öffnungen ebenfalls Öffnungen 80, 81, 82 auf, wodurch ein Verbindungskanal geschaffen wird, der den Innenraum des Gehäuses 54 bzw. die Öffnungen 58, 59 über die Öffnungen 80, 81, 82 und 78 mit der unteren Stirnfläche der zweiten Steuerscheibe 72 verbindet. Ein zweiter Verbindungskanal 84 wird durch die erste Gruppe 77 von Öffnungen durch die Steuerscheibe 12 und einen durch die Dichtung 79' umgrenzten Kanal zwischen der oberen Stirnfläche 79 der zweiten Steuerscheibe 72 und der unteren Stirnfläche der Mitnehmerscheibe 76 gebildet. Ferner besitzt die zweite Steuerscheibe 72 auf ihrer der ersten Steuerscheibe 61 zugewandten unteren Stirnfläche 73 vier weitere Verbindungskanäle 85 bis 88, deren Anordnung später beschrieben werden soll.

Die Mitnehmerscheibe 76 ist an einem Ende der Steuerwelle 45 in einer Ebene senkrecht zur Achse der Steuerwelle 45 drehfest befestigt. Die Steuerwelle 45 ist im Deckel 57 derart drehbar gelagert, daß sich ihr anderes Ende 89 außerhalb des Deckels 57 befindet. An diesem freien Ende 89 ist über eine Keilnutverbindung 90 die Kodierscheibe 47 drehfest befestigt, die als Steuertrommel ausgebildet ist und an ihrer Umfangsfläche drei in Axialrichtung nebeneinander angeordnete und sich ringförmig um die Umfangsfläche erstreckende Nockenbahnen 91, 92, 93 aufweist. Jede Nockenbahn 91, 92, 93 wird über eine neben der Kodierscheibe 47 angeordnete Abtastvorrichtung 48 in Form von drei mit den jeweiligen Nockenbahnen 91, 92, 93 in Eingriff befindlichen Schaltern 94, 95, 96 abgetastet. Die Nockenbahnen 91, 92, 93 sind derart ausgebildet, daß in Form eines Gray-Kodes jeweils eine später beschriebene Betriebsstellung der zweiten Steuerscheibe 72 eindeutig einer Stellung der Schalter 94, 95, 96 zugeordnet ist.

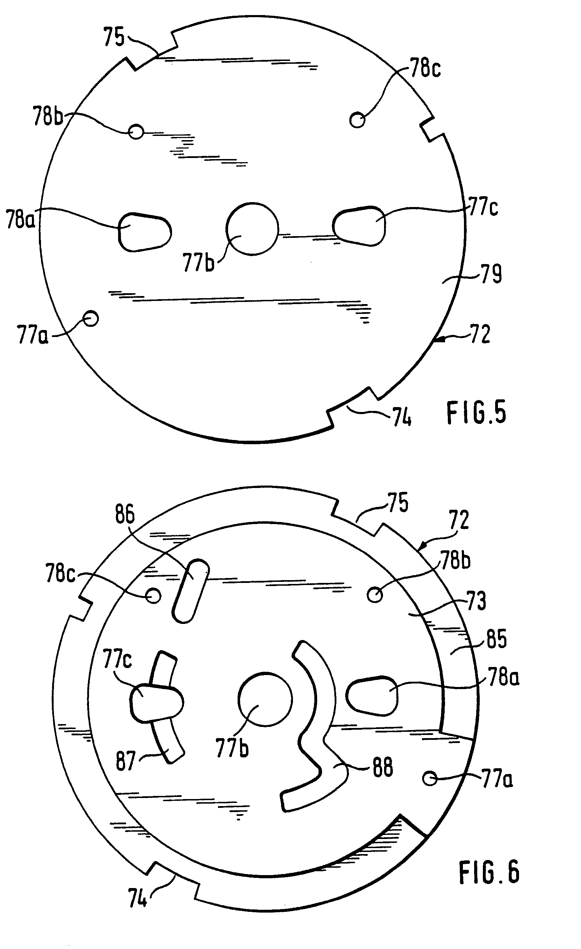

Die Lage der Öffnungen b... i in der ersten Steuerscheibe 61 und der Verbindungskanäle 85, 86, 87, 88 und der Öffnungen 77, 78 in der zweiten Steuerscheibe 72 ist in den Fig. 4 bis 6 dargestellt, wobei Fig. 5 eine Ansicht der oberen Stirnfläche 79 der zweiten Steuerscheibe 72 und Fig. 6 eine Ansicht der unteren Stirnfläche 73 der zweiten Steuerscheibe 72 darstellt. Die Verbindungskanäle 85 bis 88 werden durch nutförmige Vertiefungen in der unteren Stirnfläche 73 gebildet. Der Verbindungskanal 85 stellt einen sich an der unteren Stirnfläche 73 ringförmig entlang der Umfangsfläche erstreckenden Bereich geringere Dicke der zweiten Steuerscheibe 72 dar. Im übrigen soll die Anordnung der Verbindungskanäle und Öffnungen im Zusammenhang mit der Beschreibung der Funktion dargestellt werden.

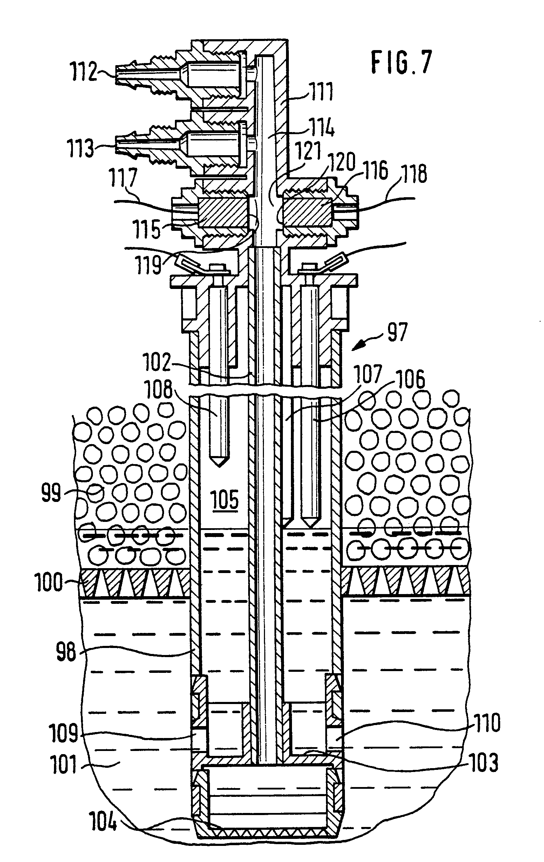

Fig. 7 zeigt eine Teilschnittdarstellung des in den Salzbehälter 6 hineinragenden unteren Endes der Verbindungsleitung 35, das durch eine Sauglanze 97 gebildet wird. Die Sauglanze 97 umfaßt ein äußeres Rohr 98, das sich von oben in den Salzbehälter 6 durch einen einen Salzaufnahmeraum 99 nach unten begrenzenden Siebboden 100 in einen Solebereich 101 des Salzbehälters 6 hineinerstreckt. Innerhalb des Rohres 98 ist konzentrisch zu diesem ein Innenrohr 102 angeordnet, dessen unteres Ende auf seiner Außenseite in einem Flanschteil 103 des Rohres 98 gehalten ist und mit dem Solebereich über ein Sieb 104 in Verbindung steht. In dem Ringraum 105 zwischen Innenrohr 102 und Rohr 98, der über radiale Öffnungen 109, 110 im Flanschteil 103 mit dem Solebereich 101 in Verbindung steht, sind drei Füllstandselektroden 106, 107, 108 angeordnet. Zwei Elektroden 106, 107 sind mit ihren Elektrodenenden in gleicher vorbestimmter Höhe oberhalb des Siebbodens 100 und die dritte Füllstandselektrode 108 mit ihrem Elektrodenende um einen vorbestimmten Betrag oberhalb der Elektrodenenden der Elektroden 106, 107 angeordnet. Dadurch ist über die Elektroden 106, 107, 108 ein Solefüllstand zwischen dem den Elektrodenenden der Elektroden 106, 107 entsprechenden Solepegel und dem dem Elektrodenende der Elektrode 108 entsprechenden Solepegel abgreifbar.

Das freie obere Ende des Innenrohres 102 ist mit einem Kopfteil 111 verbunden, das zwei Anschlüsse 112, 113 für die Verbindungsleitung 35 und einen Kanal 114 zwischen den Anschlüssen 112, 113 und dem Innenrohr 102 aufweist. Im Bereich zwischen den Anschlüssen 112, 113 und dem Innenrohr 102 sind beidseitig des Kanals 114 jeweils Elektroden 115, 116 angeordnet, die über Leitungen 117, 118 mit den beiden Polen einer Gleichspannungsquelle verbindbar sind. Ferner ist in den von der Gleichspannungsquelle, den Leitungen 117, 118 und den Elektroden 115, 116 gebildeten Stromkreis ein (nicht gezeigtes) Strommeßgerät geschaltet. Ein weiterer Teil dieses Stromkreises wird ferner von dem zwischen den gegenüberliegenden Enden 119, 120 der Elektroden 115, 116 liegenden Bereich 121 des Kanals 114 gebildet. Der Abstand der Enden 119, 120 voneinander wird derart gewählt, daß bei Anlegen einer vorbestimmten Spannung zwischen den Elektroden 115, 116 eine Elektrolyse der Sole im Bereich 121 durchführbar ist.

Im Betrieb befindet sich zunächst die zweite Steuerscheibe 72 in einer solchen Winkelstellung auf der ersten Steuerscheibe 61, daß die Öffnung 66 und die Öffnung 71 der ersten Steuerscheibe 61 mit Öffnungen 77 b bzw. 77 a der ersten Gruppe 77 von Öffnungen in der zweiten Steuerscheibe 72 ausgerichtet in Verbindung stehen. Dadurch wird eine Strömungsverbindung von der Abflußleitung 31 über die Öffnung d am Gehäuse 54, die Öffnungen 66 und 77 b , den Verbindungskanal 84, die Öffnungen 77 a und 71 sowie die Öffnung i am Gehäuse 54 mit der Steuerleitung 37 geschaffen und dadurch der Druck in der Steuerleitung 37 und den Steuerkammern 11, 12 der Membranventile 9, 10 auf den niedrigen Druck der Abflußleitung 31 gesetzt. Dadurch befinden sich die Membranventile 9, 10 in der offenen Stellung und geben einen Durchfluß von zu enthärtendem Wasser über die Zulaufleitung 15 und die Verbindungsleitung 16 zum Ionenaustauscher und von enthärtetem Wasser über die Verbindungsleitung 18 und die Ablaufleitung 19 frei. Damit wird der Ionenaustauscher 5 in Normalbetrieb zum Enthärten von durchströmendem Wasser betrieben.

Nach einer vorgegebenen Betriebszeit, die in der Steuerung 51 voreingestellt ist, betätigt die Steuerung 51 den Antrieb 46 derart, daß dieser die Steuerwelle 45 mit der Mitnehmerscheibe 76 und der zweiten Steuerscheibe 72 um einen vorbestimmten Winkel gegenüber der ersten Betriebsstellung in eine Warteposition dreht. In dieser Stellung ist die Öffnung 77 a gegenüber der Öffnung 71 verdreht und damit der Strömungskanal vom Anschluß d zum Anschluß i unterbrochen und die Öffnung 71 der ersten Steuerscheibe 61 mit dem Ringverbindungskanal 85 der zweiten Steuerscheibe in Verbindung. Dadurch, daß dieser Ringverbindungskanal 85 an seiner Außenseite in den Innenraum des Gehäuses 54 mündet, ist damit eine Verbindung der Öffnungen 58, 59 bzw. des Anschlusses a des Drehschieberventils 23 über den Verbindungskanal 85, die Öffnung 71 und die Öffnung i im Gehäuse 54 geschaffen, so daß der Steuereingang 14 und damit die Steuerkammern 11, 12 der Membranventile 9, 10 über die Verbindungsleitung 18 und die Steuerleitung 37 mit dem zulaufseitigen Wasserdruck beaufschlagt werden und damit beide Ventile 9, 10 geschlossen werden, so daß die Verbindung der Zulaufleitung 15 mit der Verbindungsleitung 16 bzw. der Verbindungsleitung 18 mit der Ablaufleitung 19 unterbrochen und damit der Wasserdurchlauf durch den Austauscher 5 unterbunden ist. In dieser zweiten Winkelstellung ist ferner der Kanal 87, der sich in der in Fig. 6 gezeigten Weise um einen vorgegebenen Winkelbetrag beidseitig der Öffnung 77 c erstreckt, bereits mit der Öffnung 68 in Überdeckung, so daß der Anschluß f über die Öffnung 68, den Kanal 87, die Öffnung 77 c, den zweiten Verbindungskanal 84 und die Öffnungen 77 b und 66 mit dem Anschluß d im Gehäuse 54 verbunden sind und damit eine Verbindung der Verbindungsleiung 16 mit der Abflußleitung 31 geschaffen ist.

Nach einer weiteren vorgegebenen Zeit betätigt die Steuerung 51 den Antrieb 46 derart, daß dieser die zweite Steuerscheibe 72 in eine dritte Stellung zur Durchführung des Rückspülens dreht. In dieser Stellung ist weiterhin die Öffnung 71 der ersten Steuerscheibe 61 mit dem Ringkanal 85 in Überdeckung, so daß die Membranventile 9, 10 in gleicher Weise wie im vorhergehenden Schritt geschlossen bleiben. Ebenso bleibt die Verbindung der Leitung 34 mit der Abflußleitung 31 dadurch aufrechterhalten, daß in dieser Betriebsstellung die Öffnung 77 c mit der Öffnung 68 der ersten Steuerscheibe 61 in Überdeckung gelangt. Schließlich sind die Öffnungen 78 a und 67 derart angeordnet, daß sie in dieser Betriebsstellung der zweiten Steuerscheibe 72 in Überdeckung gelangen, wodurch über die Öffnungen 58, 59, den Innenraum des Gehäuses 54 und die Öffnungen 78 a und 67 eine Verbindung vom Anschluß a zum Anschluß e des Drehschieberventils 22 und damit eine Verbindung der Verbindungsleitung 18 mit der Leitung 33 geschaffen wird. Über diese Verbindung wird die Verbindungsleitung 18 mit dem einlaufseitigen Wasserdruck beaufschlagt, und es strömt Wasser vom Zulauf 15 durch die Verbindungsleitung 18 in einer zur Betriebsrichtung umgekehrten Richtung durch den Ionenaustauscher 5 bzw. dessen Harzbett 17 in die Verbindungsleitung 16 und über die Leitung 34, die Verbindung des Anschlusses f mit dem Anschluß d des Drehschieberventils 22 zur Abflußleitung 31. Dadurch wird der Ionenaustauscher 5 rückgespült.

Nach einer für das Rückspülen voreingestellten Zeit betätigt die Steuerung 51 den Antrieb 46 derart, daß dieser die zweite Steuerscheibe 72 in eine vierte Winkelstellung gegenüber der ersten Steuerscheibe 61 weiterbewegt. In dieser Stellung ist weiterhin in der oben beschriebenen Weise die Verbindung des Anschlusses a mit dem Anschluß i aufrechterhalten, wodurch die Membranventile 9, 10 weiterhin geschlossen bleiben. Ebenfalls ist die Verbindung der Anschlüsse f und d weiter dadurch aufrechterhalten, daß der Verbindungskanal 87 entgegen der Drehrichtung der zweiten Steuerscheibe 72 um einen dem Verdrehwinkel von der dritten in die vierte Betriebsstellung entsprechenden Winkelbetrag verlängert ist, wie in Fig. 6 dargestellt ist. Ferner sind die Öffnungen 78 c und 70 derart angeordnet, daß sie in dieser Betriebsstellung in Überdeckung gelangen. Dadurch wird eine Verbindung vom Anschluß a über die Öffnungen 58, 59, den Innenraum des Gehäuses 54 und die Öffnungen 78 c und 70 zum Anschluß h geschaffen, wodurch Wasser vom Zulauf 15 in die Verbindungsleitung 35 und damit in den Salzbehälter zum Auffüllen des Salzbehälters eintreten kann. Diese Betriebsphase bzw. Drehstellung der zweiten Steuerscheibe 72 wird solange aufrechterhalten, bis der Pegelstand im Salzbehälter 6 die Elektrode 108 erreicht und damit ein Signal an die Steuerung 51 gemeldet wird. Die Steuerung 51 betätigt daraufhin den Antrieb 46 derart, daß dieser die zweite Steuerscheibe 72 um einen vorbestimmten Winkelbetrag in eine fünfte Betriebsstellung weiterdreht.

In dieser fünften Betriebsstellung ist weiterhin die Verbindung der Anschlüsse a und i über den Ringkanal 85 in der oben beschriebenen Weise aufrechterhalten, so daß die Membranventile 9, 10 weiterhin geschlossen bleiben. Der Verbindungskanal 86 in der unteren Stirnfläche 73 der zweiten Steuerscheibe 72 ist so angeordnet, daß er in dieser Betriebsstellung sowohl die Öffnung 68 als auch die Öffnung 70 in der ersten Steuerscheibe 61 überdeckt und damit eine Verbindung vom Anschluß f zum Anschluß h des Drehschieberventils 22 schafft. Damit ist die Verbindungsleitung 35 über die Leitung 34 mit der Verbindungsleitung bzw. dem Zulauf 16 zum Ionenaustauscher 5 verbunden. Ferner sind die Öffnungen 64 in der ersten Steuerscheibe 61 und die Öffnung 78 b in der zweiten Steuerscheibe 72 so angeordnet, daß sie in dieser fünften Betriebsstellung in Überdeckung gelangen, wodurch eine Verbindung vom Anschluß a über die Öffnungen 58, 59, den Innenraum des Gehäuses 54 und die Öffnungen 78 b und 64 zum Anschluß b des Drehschieberventils 22 geschaffen wird. Dadurch wird der Eingang 24 des Injektors 23 über die Leitung 29 und die Verbindungsleitung 18 mit der Zulaufleitung 15 verbunden und Wasser strömt über diese Verbindung durch den Injektor 23 und über dessen Ausgang 26 zum Abfluß 32. Schließlich ist der Verbindungskanal 88 derart geformt, daß er in dieser fünften Betriebsstellung sowohl mit der Öffnung 65 als auch mit der Öffnung 67 der ersten Steuerscheibe 61 in Überdeckung gelangt, wodurch eine Verbindung des Anschlusses e mit dem Anschluß c über die Öffnung 67, den Kanal 88 und die Öffnung 65 geschaffen wird. Damit wird die ablaufseitige Verbindungsleitung 18 des Injektors 5 mit dem Sauganschluß 25 des Injektors verbunden und damit aufgrund der oben beschriebenen Durchströmung des Injektors 23 ein Unterdruck in der Verbindungsleitung 18 geschaffen. Aufgrund dieses Unterdruckes wird Sole aus dem Solebereich 101 des Salzbehälters 6 durch die Sauglanze 97, die Verbindungsleitung 35, die Verbindung der Anschlüsse h und f im Drehschieberventil 22, die Leitung 34 und die Verbindungsleitung 16 in den Ionenaustauscher 5 eingesaugt und damit der Ionenaustauscher mittels der Sole regeneriert.

Nach einer vorgegebenen Zeit, in der eine vorgegebene Solemenge in den Ionenaustauscher 5 eingesaugt wurde, betätigt die Steuerung 51 den Antrieb 46 zum Weiterdrehen der zweiten Steuerscheibe 72 in eine sechste Betriebsstellung. In dieser Betriebsstellung ist weiterhin in der oben beschriebenen Weise die Verbindung der Anschlüsse a und i aufrechterhalten, so daß die Membranventile 9 und 10 weiterhin geschlossen sind. Der Verbindungskanal 88 ist so ausgebildet, daß er auch in dieser Betriebsstellung beide Öffnungen 65, 67 überdeckt und damit weiterhin eine Verbindung der Anschlüsse e und c schafft. Allerdings überdeckt die Öffnung 78 b nicht mehr die Öffnung 64, so daß die Verbindung vom Anschluß a zum Anschluß b unterbrochen und damit der Injektor 23 außer Betrieb gesetzt ist. Der Verbindungskanal 86 ist ebenfalls aus der Überdeckung der Öffnungen 70 und 68 herausgewandert, so daß die Verbindung zwischen den Anschlüssen h und f und damit die Verbindung zum Salzbehälter 6 unterbrochen ist. Die Öffnungen 78 c und 69 sind so angeordnet, daß sie in dieser sechsten Betriebsstellung in Überdeckung gelangen, wodurch eine Verbindung vom Anschluß a über die Öffnungen 58, 59, den Innenraum des Gehäuses 54 und die Öffnungen 78 c und 69 zum Anschluß g geschaffen wird. Dadurch kann Wasser von der Zulaufleitung 15 über die Drossel 27 mit einem durch diese Drossel vorgegebenen Durchsatz in die

die zulaufseitige Verbindungsleitung 16 des Ionenaustauschers 5 gelangen und damit die im vorherigen Betriebsschritt in den Ionenaustauscher 5 eingefüllte Sole langsam durch das Harzbett 17 nach unten hindurchschieben, wobei die verbleibende Restlösung nach dem Austritt aus dem Harzbett 17 über die Verbindungsleitung 18, die Leitung 33 und die oben beschriebene Verbindung der Anschlüsse 5 und 3 des Drehschieberventils 22 in die Abflußleitung 31 ausgeschoben wird.

Ist nach einer vorbestimmten Zeit die Sole in der oben beschriebenen Weise durch das Harzbett 17 zum Regenerieren des Ionenaustauschers 5 hindurchbewegt, so betätigt die Steuerung den Antrieb 46 zum Weiterdrehen der zweiten Steuerscheibe 72 in eine siebte Betriebsstellung. In dieser Betriebsstellung ist weiterhin die Verbindung der Anschlüsse a und i über den Ringkanal 85 aufrechterhalten, so daß die Membranventile 9 und 10 weiterhin geschlossen bleiben. Ferner ist der Verbindungskanal 88 so ausgebildet, daß er auch in dieser Betriebsstellung die beiden Öffnungen 65, 67 überdeckt, wodurch in gleicher Weise wie beim vorhergehenden Betriebsschritt eine Verbindung der Anschlüsse i und c und damit der ablaufseitigen Verbindungsleitung 18 des Ionenaustauschers 5 mit der Abflußleitung 31 aufrechterhalten ist. Die Öffnung 78 c ist jedoch aus der Überdeckung mit der Öffnung 69 herausbewegt, so daß die Verbindung der Anschlüsse e und a des Drehschieberventils 22 und damit der Zulauf von Wasser in den Ionenaustauscher 5 unterbrochen ist.

In dieser Warteposition verbleibt das Steuerventil 4, bis von der Steuerung 51 nach einer vorgegebenen Zeit der Antrieb 46 zum Weiterdrehen der zweiten Steuerscheibe 72 in die achte Betriebsstellung zum Auswaschen des Ionenaustauschers 5 gedreht wird. In dieser Betriebsstellung ist weiterhin die Verbindung der Anschlüsse a und i über den Ringkanal 85 in der oben beschriebenen Weise aufrechterhalten, so daß die Membranventile 9 und 10 weiterhin geschlossen bleiben. Der Verbindungskanal 88 ist so ausgebildet, daß er in dieser Stellung nicht mehr gleichzeitig mit den Öffnungen 65 und 67 in Überdeckung ist, so daß die Verbindung vom Anschluß e zum Anschluß c unterbrochen ist. Dadurch, daß die Öffnungen 78 a und 77 c so angeordnet sind, daß sie in dieser Betriebsstellung der zweiten Steuerscheibe 72 mit den Öffnungen 68 bzw 67 der ersten Steuerscheibe 61 in Überdeckung sind, ist jedoch zum einen eine erste Verbindung vom Anschluß a über die Öffnungen 58, 59, den Innenraum des Gehäuses 54 und die Öffnungen 78 a, 69 zum Anchluß f sowie eine zweite Verbindung vom Anschluß e über die Öffnungen 67 und 77, den zweiten Verbindungskanal 84 an der oberen Stirnfläche 79 der zweiten Steuerscheibe 72 und die Öffnungen 77 b und 66 mit dem Anschluß d geschaffen. Durch die oben beschriebene erste Verbindung kann Wasser vom Zulauf 15 in die einlaufseitige Verbindungsleitung 16 des Ionenaustauschers 5 hineinströmen und durch die zweite Verbindung aus der auslaufseitigen Verbindungsleitung 18 des Ionenaustauschers 5 in den Abfluß 31 abfließen. Dieser Auswaschvorgang wird dadurch beschleunigt, daß der Querschnitt der Öffnungen 78 a, 77 b, 77 c sowie der Öffnungen 68, 66 und 67 entsprechend größer gewählt ist als der der übrigen Öffnungen der Steuerscheiben 61, 72. Nach einer vorbestimmten Zeit dieses Auswaschvorganges ist der Ionenaustauscher 5 wieder betriebsbereit und die Steuerung 51 betätigt den Antrieb 46 zum Weiterdrehen der zweiten Steuerscheibe 72 in die erste Betriebsstellung.

Damit ergibt sich bei dieser Ausführungsform der Vorteil, daß lediglich ein Steuerventil 4 mit einem Antrieb 46 erforderlich ist, um sämtliche zum Betrieb und Regenerieren des Ionenaustauschers 5 erforderlichen Betriebsphasen während eines einfachen Umlaufes des Drehschieberventils 22 um 360° anzusteuern. Die einzelnen Betriebsphasen sind dabei bestimmten Winkelstellungen des Drehschieberventils 22 zugeordnet, und die Nockenbahnen der Kodierscheibe 47 sind so angeordnet, daß in jeder Winkelstellung einer Betriebsphase eine andere Kombination der Nocken vorliegt, so daß die Signalstellung der drei Schalter 94, 95, 96 in der Abtastvorrichtung 48 jeder Betriebsstellung eindeutig zugeordnet ist und damit eine Rückmeldung der erreichten Betriebsstellung über die Leitung 50 an eine Steuerung 51 möglich ist. Dies ermöglicht einerseits eine ständige Kontrolle der gerade vorliegenden Betriebsstellung als auch eine exakte Zeitsteuerung für jede einzelne Betriebsphase. Durch die Verwendung von Keramikscheiben 61, 72 wird dabei eine exakte Dichtung zwischen den aneinanderliegenden Stirnflächen 63, 73 als auch eine leichte und exakte Steuerbarkeit des Steuerventils 4 erreicht. Die zur Dichtung zwischen beiden Keramikscheiben 61, 72 erforderliche Anpreßkraft wird dabei dadurch erreicht, daß die Maße der einzelnen Bauteile 54, 61, 72, 76 und 57 des Drehschieberventils 22 so gewählt sind, daß die Dichtungen 60, 79' bei der Montage etwas zusammengepreßt werden und dadurch die erste Steuerscheibe 61 von der Bodenfläche 56 zur zweiten Steuerscheibe 72 hin bzw. die zweite Steuerscheibe 72 von der Mitnehmerscheibe 76 weg zur ersten Steuerscheibe 61 hin drücken.

Die Anordnung der Elektroden 115, 116 am Kopfteil 111 der Sauglanze 97 hat ferner den Vorteil, daß die bei der Regeneration eventuell erforderliche Chlor-Herstellung durch Elektrolyse der Solelösung während des Absaugvorgangs in der fünften Betriebsphase direkt an der abgesaugten Solelösung und nicht im Salzbehälter 6 bzw. dessen Solebereich 101 durchgeführt wird. Dadurch werden entstehende Chlor-Dämpfe sofort über die Verbindungsleitung 35 abgesaugt und können nicht ins Freie gelangen, was bei einer Elektrolyse im Salzbehälter 6 selbst der Fall wäre. Diese fünfte Betriebsphase, der Besalzungsvorgang, wird vorzugsweise dabei solange durchgeführt, bis die mit der Steuerung 151 verbundenen Elektroden 106, 107 das Erreichen des unteren Solepegels in Höhe der Elektrodenenden dieser Elektroden melden.

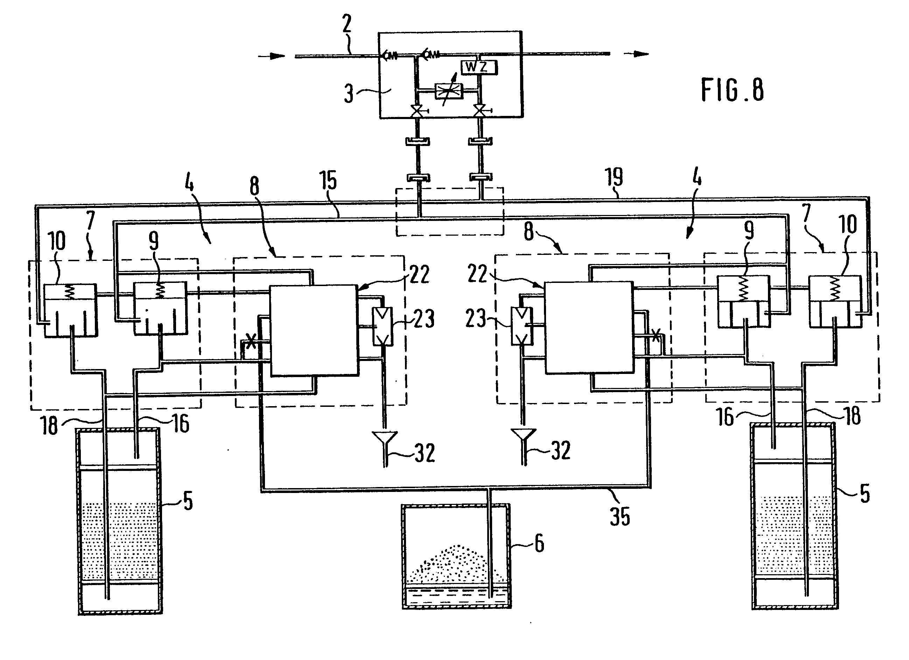

In Fig. 8 ist schließlich eine weitere Ausführungsform der Erfindung dargestellt, die sich von der oben beschriebenen Ausführungsform nach den Fig. 1 bis 7 nur dadurch unterscheidet, daß jeweils zwei Steuerventile 4 und Ionenaustauscher 5 parallel vorgesehen sind. Das Steuerventil 4 ist dabei in gleicher Weise wie oben beschrieben ausgebildet. Die Steuerung 51 ist bei dieser Ausführungsform derart ausgebildet, daß sie die oben beschriebenen Betriebsphasen 2 bis 8 der einen aus Steuerventil 4 und Ionenaustauscher 5 bestehenden Anlage durchführt, während der andere Anlagenteil sich in der Betriebsphase 1 befindet. Damit ist eine ständige Bereitstellung von enthärtetem Wasser an der Wasserleitung 2 sichergestellt. Vorzugsweise ist bei dieser Parallelschaltung nur ein Salzbehälter 6 vorgesehen und die Sauglanze 97 weist in der in Fig. 7 gezeigten Weise zwei Anschlüsse 112, 113 für jeweils eine Verbindungsleitung 35 zu jedem der beiden Anlagenteile auf.

Der erfindungsgemäße Aufbau des Steuerventils 4 besitzt weiterhin den Vorteil, daß in der Betriebsphase 1 nur die erste Ventileinheit 7 durchströmt ist und die zweite Ventileinheit 8 lediglich zur Auf-Steuerung des ersten und zweiten Absperrventils 9, 10 verwendet wird. Dadurch muß nur die erste Ventileinheit 7 die für den Betrieb erforderlichen Durchflußquerschnitte aufweisen und die Durchflußquerschnitte der zweiten Ventileinheit 8 können entsprechend der zugelassenen Regenerationsdauer wesentlich geringer gewählt werden, was eine wesentlich verringerte Baugröße des Steuerventils 4 ermöglicht. Dies ist insbesondere dann ein Vorteil, wenn gemäß der zweiten Ausführungsform zwei Anlagen im Parallelbetrieb arbeiten, da dann für die Regeneration ein großer Zeitraum zur Verfügung steht und die Durchflußquerschnitte der zweiten Ventileinheit 8 entsprechend klein gewählt werden müssen.

**Patentansprüche**

1. Wasserenthärtungsanlage mit einem Zulauf für zu enthärtendes Wasser und einem Ablauf für enthärtetes Wasser, einen Ionenaustauscher zwischen Zulauf und Ablauf, einem Salzbehälter und einem in den Zulauf und Ablauf geschalteten und mit dem Salzbehälter sowie einem Abfluß verbindbaren Steuerventil zum Steuern von Betriebsphasen der Wasserenthärtungsanlage, dadurch gekennzeichnet, daß das Steuerventil (4) eine erste Ventileinheit (7) mit einem ersten Absperrventil (9) für den Zulauf (15) und einem zweiten Absperrventil (10) für den Ablauf (19) und eine mit der ersten Ventileinheit (7) funktionell verbundene zweite Ventileinheit (8), die mit dem Salzbehälter (6) und dem Abfluß (32) verbindbar ist und den Zufluß zum und Abfluß vom Ionenaustauscher (5) entsprechend der Betriebsphasen der Wasserenthärtungsanlage (1) steuert, aufweist.

2. Wasserenthärtungsanlage nach Anspruch 1, dadurch gekennzeichnet, daß die zweite Ventileinheit (8) ein Drehschieberventil (22) mit einem Gehäuse (54), einer im Gehäuse (54) feststehend angeordneten ersten Steuerscheibe (61) und einer verdrehbar zu dieser angeordneten zweiten Steuerscheibe (72) aufweist.

3. Wasserenthärtungsanlage nach Anspruch 2, dadurch gekennzeichnet, daß die erste (61) und die zweite Steuerscheibe (72) als Keramikscheiben ausgebildet sind.

4. Wasserenthärtungsanlage nach Anspruch 2 oder 3, dadurch gekennzeichnet, daß die erste Steuerscheibe (61) eine Mehrzahl von Öffnungen (64-71) aufweist, die auf der der zweiten Steuerscheibe (72) abgewandten Seite der ersten Steuerscheibe (61) mit entsprechenden Zufluß- und Abflußöffnungen (a... i) des Gehäuses (54) dicht verbunden sind, und daß die zweite Steuerscheibe (72) eine Mehrzahl von Kanälen (83-88) zum Verbinden der Öffnungen (64-71) der ersten Steuerscheibe (61) derart, daß in jeder Drehstellung der zweiten Steuerscheibe (72) diejenigen Öffnungen (64-71) der ersten Steuerscheibe (61) verbunden sind, die einer der Drehstellung der zweiten Steuerscheibe (72) zugeordneten Betriebsphase der Wasserenthärtungsanlage (1) entsprechen, aufweist.

5. Wasserenthärtungsanlage nach Anspruch 4, dadurch gekennzeichnet, daß die Kanäle (83-88) auf der der ersten Steuerscheibe (61) zugewandten und der der ersten Steuerscheibe (61) abgewandten Seite der zweiten Steuerscheibe (72) angeordnet sind.

6. Wasserenthärtungsanlage nach Anspruch 5, dadurch gekennzeichnet, daß auf der der ersten Steuerscheibe (61) abgewandten Seite der zweiten Steuerscheibe (72) eine mit dieser drehfest verbundene Mitnehmerscheibe (76) angeordnet ist und daß zwischen der zweiten Steuerscheibe (72) und der Mitnehmerscheibe (76) eine Dichtung (79') zum flüssigkeitsdichten Abtrennen eines ersten Bereiches (77) der zweiten Steuerscheibe (72) von einem zweiten Bereich (78, 84) angeordnet ist.

7. Wasserenthärtungsanlage nach Anspruch 6, dadurch gekennzeichnet, daß der erste Bereich (77) mit dem Abfluß (32) und der zweite Bereich (78, 84) mit dem Zulauf (15) verbunden ist.

8. Wasserenthärtungsanlage nach einem der Ansprüche 4 bis 7, dadurch gekennzeichnet, daß ein Injektor (23) mit einem Injektorzulauf (24), einem Absauganschluß (25) und einem mit dem Abfluß (32) verbundenen Injektorablauf (26) vorgesehen ist und daß die Öffnungen (64-71) und Kanäle (83-88) so angeordnet sind, daß in einer Drehstellung der zweiten Steuerscheibe (72) der Injektorzulauf (24) mit dem Zulauf (15), der Absauganschluß (25) mit einer Ablaufseite (18) des Ionenaustauschers (5) und eine Zulaufseite (16) des Ionenaustauschers (5) mit dem Salzbehälter (6) verbunden ist.

9. Wasserenthärtungsanlage nach Anspruch 8, dadurch gekennzeichnet, daß eine ausgangsseitig mit der Zulaufseite (16) des Ionenaustauschers (5) verbundene Drossel (27) vorgesehen und in einer weiteren Drehstellung der zweiten Steuerscheibe (72) die Drossel (27) eingangsseitig mit dem Zulauf (15) verbunden ist.

10. Wasserenthärtungsanlage nach einem der Ansprüche 2 bis 9, dadurch gekennzeichnet, daß die erste und die zweite Steuerscheibe (61, 72) in einem zylindrischen Hohlraum des Gehäuses (54) angeordnet und durch an den Stirnflächen des Hohlraumes (54) angeordnete elastische Dichtelemente (60, 79') gegeneinander gepreßt sind.

11. Wasserenthärtungsanlage nach einem der Ansprüche 2 bis 10, dadurch gekennzeichnet, daß die zweite Steuerscheibe (72) drehfest mit einer Kodierscheibe (47) verbunden ist und daß eine Abtasteinrichtung (48) zum Erfassen der Drehstellung der Kodierscheibe (47) vorgesehen ist.

12. Wasserenthärtungsanlage nach einem der Ansprüche 1 bis 11, dadurch gekennzeichnet, daß die erste Ventileinheit (7) eine mit einer Anschlußplatte (41) zum Anschließen des Zulaufs (15) und des Ablaufs (19) verbindbare erste Flanschebene (38) und eine mit der zweiten Ventileinheit (8) verbindbare zweite Flanschebene (39) sowie einen Anschluß (44) zum Befestigen des Ionenaustauschers (5) aufweist.

13. Wasserenthärtungsanlage nach Anspruch 12, dadurch gekennzeichnet, daß die erste Flanschebene (38) und die zweite Flanschebene (39) parallel zueinander an gegenüberliegenden Seiten der ersten Ventileinheit (7) angeordnet sind, so daß die erste Ventileinheit (7) zwischen die Anschlußplatte (41) und die zweite Ventileinheit (8) einspannbar ist.

14. Wasserenthärtungsanlage nach einem der Ansprüche 1 bis 13, dadurch gekennzeichnet, daß in einem das Steuerventil (4) mit dem Salzbehälter (6) verbindenden Strömungskanal (114) zwei bezüglich des Strömungskanals (114) gegenüberstehende Elektroden (115, 116) angeordnet sind.

15. Wasserenthärtungsanlage nach Anspruch 14, dadurch gekennzeichnet, daß die Elektroden (115, 116) mit einer Überwachungseinrichtung (51) verbunden sind, die bei Abfall des Elektrodenstroms unter einem vorbestimmten Schwellwert ein Alarmsignal ausgibt.

## Claims

1. Water softening plant with an inlet for water to be softened and an outlet for softened water, an ion exchanger between inlet and outlet, a salt container, and a control valve connected in the inlet and outlet and connectable to the salt container and also to a drain for controlling operating phases of the water softening plant, characterized in that the control valve (4) has a first valve unit (7) with a first shut-off valve (9) for the inlet (15) and a second shut-off valve (10) for the outlet (19) and a second valve unit (8) which is functionally connected to the first valve unit (7), which is connectable to the salt container (6) and the drain (32) and controls the inlet to, and outlet from, the ion exchanger (5) in accordance with the operating phases of the water softening plant (1).

2. Water softening plant according to Claim 1, characterized in that the second valve unit (8) has a rotary disc valve (22) with a housing (54), a first control disc (61) stationarily arranged in the housing (54) and a second control disc (72) rotatively arranged with respect to the latter.

3. Water softening plant according to Claim 2, characterized in that the first (61) and the second control disc (72) are constructed as ceramic discs.

4. Water softening plant according to Claim 2 or 3, characterized in that the first control disc (61) has a multiplicity of openings (64-71) which are hermetically connected, on the side of the first control disc (61) facing away from the second control disc (72), to corresponding inlet and outlet openings (a... i) of the housing (54), and in that the second control disc (72) has a multiplicity of channels (83-88) for connecting the openings (64-71) of the first control disc (61) in a manner such that, in every rotary position of the second control disc (72), those openings (64-71) of the first control disc (61) are connected which correspond to an operating phase of the water softening plant (1) allocated to the rotary position of the second control disc (72).

5. Water softening plant according to Claim 4, characterized in that the channels (83-88) are arranged on the side of the second control disc (72) facing the first control disc (61) and facing away from the first control disc (61).

6. Water softening plant according to Claim 5, characterized in that, on the side of the second control disc (72) facing away from the first control disc (61), there is arranged a drive disc (76) connected to the latter in a rotationally fixed manner, and in that, between the second control disc (72) and the drive disc (76), there is arranged a seal (79') for separating, in a liquid-tight manner, a first region (77) of the second control disc (72) from a second region (78, 84).

7. Water softening plant according to Claim 6, characterized in that the first region (77) is connected to the drain (32) and the second region (78, 84) is connected to the inlet (15).

8. Water softening plant according to one of the Claims 4 to 7, characterized in that an injector (23) with an injector inlet (24), a suction connection (25) and an injector outlet (26) connected to the drain (32) is provided, and in that the openings (64-71) and channels (83-88) are so arranged that, in one rotary position of the second control disc (72), the injector inlet (24) is connected to the inlet (15), the suction connection (25) is connected to an outlet side (18) of the ion exchanger (5) and an inlet side (16) of the ion exchanger (5) is connected to the salt container (6).

9. Water softening plant according to Claim 8, characterized in that a throttle (27) connected on the outlet side to the inlet side (16) of the ion exchanger (5) is provided and, in a further rotary position of the second control disc (72), the throttle (27) is connected on the inlet side to the inlet (15).

10. Water softening plant according to one of the Claims 2 to 9, characterized in that the first and the second control discs (61, 72) are arranged in a cylindrical cavity of the housing (54) and are pressed against each other by elastic sealing elements (60, 79') arranged at the end surfaces of the cavity (54).

11. Water softening plant according to one of the Claims 2 to 10, characterized in that the second control disc (72) is connected in a rotatably fixed manner to a coding disc (47) and that a sensing device (48) is provided for detecting the rotary position of the coding disc (47).

12. Water softening plant according to one of the Claims 1 to 11, characterized in that the first valve unit (7) has a first flange surface (38) connectable to a connecting plate (41) for connection to the inlet (15) and the outlet (19) and a second flange surface (39) connectable to the second valve unit (8), and also a connection (44) for attaching the ion exchanger (5).

13. Water softening plant according to Claim 12, characterized in that the first flange surface (38) and the second flange surface (39) are arranged parallel to each other on opposite sides of the first valve unit (7) so that the first valve unit (7) can be clamped between the connecting plate (41) and the second valve unit (8).

14. Water softening plant according to one of the Claims 1 to 13, characterized in that two electrodes (115, 116), which are opposite each other with respect to the flow channel (114) are arranged in a flow channel (114) connecting the control valve (4) to the salt container (6).

15. Water softening plant according to Claim 14, characterized in that the electrodes (115, 116) are connected to a monitoring device (51) which emits a warning signal if the electrode current drops below a predetermined threshold value.

**Revendications**

1. Installation d'adoucissement d'eau comprenant une arrivée pour l'eau à adoucir et un départ pour l'eau adoucie, un échangeur d'ions intercalé entre l'arrivée et le départ, un réservoir de sel et un distributeur destiné à la commande des phases de l'installation d'adoucissement d'eau, qui est intercalé dans l'arrivée et le départ, et peut être relié au réservoir de sel ainsi qu'à un écoulement, caractérisée en ce que le distributeur (4) comprend une première unité de robinetterie (7) qui comprend une première soupape d'arrêt (9) pour l'arrivée (15) et une deuxième soupape d'arrêt (10) pour le départ (19), et une deuxième unité de robinetterie (8) reliée fonctionnelle ment à la première unité de robinetterie (7), et qui peut être reliée au réservoir de sel (6) et à l'écoulement (32), et qui commande l'envoi du flux à l'échangeur d'ions (5) et son écoulement à partir de cet échangeur en fonction des phases de travail de l'installation d'adoucissement d'eau (1).

2. Installation d'adoucissement d'eau selon la revendication 1, caractérisée en ce que la deuxième unité de robinetterie (8) comprend un distributeur à tiroir tournant (22) comprenant un corps (54), un premier disque de distribution (61) monté fixe dans le corps (54) et un deuxième disque de distribution (72) monté rotatif par rapport au premier.

3. Installation d'adoucissement d'eau selon la revendication 2, caractérisée en ce que le premier (61) et le deuxième (72) disques de distribution sont constitués par des disques en céramiques.

4. Installation d'adoucissement d'eau selon la revendication 2 ou la revendication 3, caractérisée en ce que le premier disque de distribution (61) présente une pluralité d'ouvertures (64 à 71), qui sont reliées, à joint étanche, sur la face du premier disque de distribution (61) qui est la plus éloignée du deuxième disque de distribution (72) à des ouvertures d'entrée et de sortie correspondantes (a...i) du corps (54) et en ce que le deuxième disque de distribution (72) présente une pluralité de conduits (83 à 88) servant à relier les ouvertures (64 à 71) du premier disque de distribution (61) de telle manière que, dans chaque position angulaire du deuxième disque de distribution (72), les ouvertures (64 à 71) du premier disque de distribution (61) qui correspondent à une phase de travail de l'installation d'adoucissement d'eau (1) associée à la position angulaire du deuxième disque de distribution (72), soient reliées.

5. Installation d'adoucissement d'eau selon la revendication 4, caractérisée en ce que les conduits (83 à 88) sont situés sur la face du deuxième disque de distribution (72) qui est dirigée vers le pemier disque de distribution (61) et éloignée du premier disque de distribution (61).

6. Installation d'adoucissement d'eau selon la revendication 5, caractérisée en ce que, sur la face du deuxième disque de distribution (72) qui est la plus éloignée du premier disque de distribution (61), est disposé un disque entraîneur (76) relié rigidement en rotation à ce deuxième disque et en ce que, entre le deuxième disque de distribution (72) et le disque entraîneur (76) est disposée une garniture d'étanchéité (79') destinée à séparer à joint étanche aux liquides une première région (77) du deuxième disque de distribution (72) d'une deuxième région (78, 84),

7. Installation d'adoucissement d'eau selon la revendication 6, caractérisée en ce que la première région (77) est reliée à l'écoulement (32) et la deuxième région (78, 84) à l'arrivée (15).

8. Installation d'adoucissement d'eau selon l'une des revendications 4 à 7, caractérisée en ce qu'il est prévu un injecteur (23) muni d'une arrivée d'injecteur (24), d'un raccord d'aspiration (25) et d'un départ d'injecteur (26) relié à l'écoulement (32) et en ce que les ouvertures (64 à 71) et les conduits (83 à 88) sont disposés de telle manière que, dans une position angulaire du deuxième disque de distribution (72), l'arrivée de l'injecteur (24) soit reliée à l'arrivée (15), le raccord d'aspiration (25) à un côté de départ (18) de l'échangeur d'ions (5) et un côté d'arrivée (16) de l'échangeur d'ions (5) au réservoir de sel (6).

9. Installation d'adoucissement d'eau selon la revendication 8, caractérisée en ce qu'il est prévu un étranglement (27), relié, par son côté de sortie, au côté d'arrivée (16) de l'échangeur d'ions (5) et que, dans une autre position angulaire du deuxième disque de distribution (72), l'étranglement (27) est relié à l'arrivée (15) par son côté d'entrée.

10. Installation d'adoucissement d'eau selon l'une des revendications 2 à 9, caractérisée en ce que le premier et le deuxième disque de distribution (61, 72) sont disposés dans une cavité cylindrique du corps (54) et sont pressés l'un contre l'autre par des éléments d'étanchéité élastiques (60, 79') disposés au niveau des surfaces frontales de la cavité (54).

11. Installation d'adoucissement d'eau selon l'une des revendications 2 à 10, caractérisée en ce que le deuxième disque de distribution (72) est relié solidairement en rotation à un disque de codage (47) et en ce qu'il est prévu un dispositif palpeur (48) destiné à capter la position angulaire du disque de codage (47).

12. Installation d'adoucissement d'eau selon l'une des revendications 1 à 11, caractérisée en ce que la première unité de robinetterie (7) présente un premier plan de flasque (38) qui peut être relié à une plaque de raccordement (41) pour le raccordement de l'arrivée (15) et du départ (19), et un deuxième plan de flasque (39) qui peut être relié à la deuxième unité de robinetterie (8), ainsi qu'un raccord (44) destiné à la fixation de l'échangeur d'ions (5).

13. Installation d'adoucissement d'eau selon la revendication 12, caractérisée en ce que le premier plan de flasque (38) et le deuxième plan de flasque (39) sont disposés parallèlement entre eux sur des côtés opposés de la première unité de robinetterie (7), de sorte que la première unité de robinetterie (7) peut être serrée entre la plaque de raccordement (41) et la deuxième unité de robinetterie (8).

14. Installation d'adoucissement d'eau selon l'une des revendications 1 à 13, caractérisée en ce que, dans un conduit d'écoulement (114) qui relie le distributeur (4) au réservoir de sel (6) sont disposées deux électrodes (115, 116) qui sont opposées face à face par rapport au canal d'écoulement (114).

15. Installation d'adoucissement d'eau selon la revendication 14, caractérisée en ce que les électrodes (115, 116) sont reliées à un dispositif de surveillance (51) qui émet un signal d'alarme lorsque le courant des électrodes tombe au-dessous d'un seuil prédéterminé.

FIG.1

FIG.2

FIG.4

3

FIG.3

FIG.5

FIG.6

FIG.7

FIG.8